# FASCICULE DE BREVET EUROPEEN

(11) **EP 0 359 607 B1**
(45) Date de publication et mention de la délivrance du brevet: **28.04.1993**
(21) Numéro de dépôt: 89402243.3
(22) Date de dépôt: 09.08.1989
(51) Int. Cl.: G06F 15/76, G06F 13/16, G06F 15/16

(54) **Unité centrale pour système de traitement de l'information**
Zentrale Datenverarbeitungseinheit für ein Datenverarbeitungssystem
Central processing unit for a data-processing system

(30) Priorité: 12.08.1988 FR 8810858
(43) Date de publication de la demande: 21.03.1990
(73) Titulaire: BULL S.A., 92800 Puteaux (FR)
(72) Inventeur: Keryvel, George, F -75016 Paris (FR); Thomas, Jean-Louis, F -75016 Paris (FR); Timsit, Claude, F -75016 Paris (FR)
(74) Mandataire: Colombe, Michel

(56) Documents cités:
- EP-A- 0 014 926
- EP-A- 0 147 857
- FR-A- 2 536 884
- US-A- 3 566 363

## Description

L'invention se situe dans le domaine des systèmes de traitement de l'information et notamment des systèmes à haute performance utilisant des unités vectorielles.

L'invention concerne plus particulièrement une architecture d'unité centrale pouvant servir d'unité vectorielle pour ce type de système.

Pour augmenter les performances des grands ordinateurs scientifiques, on est amené à multiplier le nombre de processeurs de façon à ce que ceux-ci puissent travailler simultanément. Cette méthode, appelée parallélisation, permet donc théoriquement d'obtenir un temps de cycle global égal au temps de cycle d'un processeur élémentaire divisé par le nombre des processeurs du système. En réalité, la performance dépend aussi du taux de vectorisation que le compilateur peut obtenir pour l'application donnée. Ce problème concerne essentiellement les techniques de programmation et de compilation qui sortent du cadre de la présente invention. Par conséquent, dans la suite de l'exposé, nous ferons abstraction de cette question pour nous préoccuper essentiellement de l'architecture physique des unités centrales capables de traiter des applications vectorisées, au moins partiellement.

La performance d'un système dépend également de la performance des mémoires avec lesquelles les processeurs élémentaires doivent communiquer.

Les paramètres fondamentaux pour évaluer la performance d'une mémoire sont le temps d'accès et le temps de cycle. Le temps d'accès est défini comme étant l'intervalle de temps qui sépare l'envoi d'une requête par l'un des processeurs et l'apparition d'un signal d'acquittement indiquant que la demande est prise en compte par la mémoire et ainsi qu'une nouvelle demande peut être adressée. Le temps de cycle définit l'intervalle de temps qui sépare le moment où une demande est reçue par la mémoire et l'instant où la réponse est disponible dans le registre de sortie de la mémoire.

Selon l'évolution actuelle dans la conception des grands ordinateurs, il est nécessaire de disposer de mémoires ayant des capacités de plus en plus importantes. Cependant, il faut aussi que les mémoires associées aux processeurs aient des performances compatibles avec celles des processeurs. Il faut donc réaliser des mémoires présentant un temps d'accès et un temps de cycle le plus court possible. Mais ces conditions sont difficilement compatibles avec l'augmentation de la capacité de la mémoire car avec les technologies actuelles, le temps d'accès d'une mémoire augmente avec sa capacité.

Pour résoudre ce problème, une solution classique consiste à utiliser une mémoire constituée de plusieurs modules, chaque module ayant par conséquent un temps d'accès inférieur à celui qu'aurait une mémoire non modulaire de même capacité. D'autre part, on utilise la technique de l'entrelacement selon laquelle des demandes successives ou simultanées envoyées par les processeurs s'adressent successivement ou simultanément à des modules différents de la mémoire.

Cependant, cette solution pose un autre problème qui est celui des liaisons entre les processeurs et les divers modules mémoires. Selon une première méthode connue, on utilise un réseau d'interconnexion du type "crossbar" qui permet la liaison entre un processeur quelconque et un module quelconque. Cette solution est toutefois limitée par l'augmentation de la complexité du dispositif d'interconnexion lorsque le taux de parallélisation augmente. En effet, un réseau "crossbar" implique une centralisation des chemins qui a les effets défavorables suivants :
- augmentation de la connectique (d'autant plus importante lorsque les chemins sont larges) ;
- allongement des connexions lorsque la taille de la mémoire augmente, avec un effet défavorable sur les débits et les temps d'accès ;
- intégration difficile car le pourcentage de connexions est élevé par rapport aux fonctions logiques associées ;
- nécessité d'une gestion des commandes centralisée ce qui entraîne des difficultés dans la gestion des flots de données et des conflits ;
- absence de modularité ;
- difficulté de mettre en oeuvre des redondances pour permettre des reconfigurations.

Une autre solution connue qui n'a pas ces inconvénients consiste à utiliser une liaison de type bus entre les processeurs et les différents modules (voir US-A-3566363 par exemple). Dans ce cas, on prévoit un contrôleur mémoire par module, chaque contrôleur étant muni d'un registre d'entrée et d'un décodeur d'adresses. Pour augmenter le débit, on utilise deux bus distincts pour véhiculer les demandes et les réponses de sorte que, en mode entrelacé, le temps d'accès global de la mémoire est théoriquement égal au temps d'accès d'un module divisé par le nombre de modules.

Cependant, cette dernière solution présente l'inconvénient suivant. La réponse à une demande adressée à un module quelconque de la mémoire est disponible dans le registre de sortie du module au bout d'un temps correspondant au temps de propagation de la demande de l'un des processeurs au module auquel s'ajoute le temps de cycle du module. Or le temps de propagation et le temps de cycle peuvent être variables d'un module à l'autre. Ces différences deviennent particulièrement sensibles lorsque le nombre de processeurs et le nombre de modules augmentent car il devient alors possible que les réponses à deux demandes adressés à deux modules différents se présentent simultanément sur le bus de sortie.

L'invention a pour but de remédier à cet inconvénient en assurant que les réponses issues des différents modules seront véhiculées successivement vers les différents processeurs dans un ordre identique à l'ordre d'envoi des demandes correspondantes et acceptées par les modules.

Plus précisément l'invention a pour une unité centrale pour système de traitement de l'information, ladite unité comprenant plusieurs processeurs associés à plusieurs modules mémoires destinés à recevoir des demandes desdits processeurs lesdites demandes ayant la forme de signaux de commande, d'adressage et éventuellement de donnés, chaque module comprenant des moyens pour décoder lesdites demandes apparaissant sur son entrée et des moyens pour fournir des signaux de réponse auxdites demandes, ladite unité centrale étant caractérisée en ce que les demandes issues de chaque processeur sont transmises à l'entrée de chacun desdits modules par l'intermédiaire d'un registre à décalage d'entrée, en ce que les réponses issues de chacun desdits modules sont transmises à l'entrée de chaque processeur par l'intermédiaire d'un registre à décalage de sortie, en ce que pour tout processeur donné, le nombre d'étages dudit registre à décalage d'entrée permettant d'accéder aux modules est différent pour chacun des modules (MMⱼ) et en ce que pour tout processeur le nombre total d'étages appartenant aux registres à décalage d'entrée et de sortie associés à l'un desdits modules est constant et indépendant du module et du processeur considérés.

L'invention permet une réalisation particulièrement simple et selon laquelle l'unité centrale est caractérisée en ce qu'elle comporte un seul registre à décalage d'entrée et un seul registre à décalage de sortie, en ce que chaque processeur et chaque module est associé à un étage dudit registre à décalage d'entrée et à un étage du registre à décalage de sortie, en ce que la sortie de chaque processeur est reliée à la sortie de l'étage associé du registre à décalage d'entrée, en ce que la sortie de chaque module est reliée à la sortie de l'étage associé du registre à décalage de sortie, en ce que l'entrée de chaque processeur est reliée à la sortie de l'étage associé du registre à décalage de sortie et en ce que l'entrée de chaque module est reliée à la sortie de l'étage associé du registre à décalage d'entrée.

La solution précédente permet bien d'obtenir les performances recherchées en mode entrelacé. Cependant, il est aussi utile de pouvoir fonctionner selon un mode quelconque et par conséquent prévoir un mécanisme interdisant qu'une demande adresse un module qui vient d'être adressé par une demande précédente moins d'un certain temps minimum auparavant, ce temps minimum dépendant du temps d'accès du module. Ce problème existe également dans le système avec bus évoqué précédemment. Pour résoudre cette difficulté, on prévoit habituellement un système à fenêtres géré par les processeurs, pour prévenir ce genre de conflits.

On peut également prévoir un circuit d'inhibition temporisé qui interdit l'envoi d'une demande adressée à un module et succédant à une première demande adressée au même module après un intervalle de temps inférieur à une durée déterminée qui est fonction du temps d'accès global caractérisant chaque couple module-processeur du système.

Bien que ces solutions résolvent le problème de collision de demandes successives trop rapprochées, il en résulte une complication dans la réalisation soit des processeurs soit du circuit d'inhibition. Cette solution présente en outre l'inconvénient d'entraîner un temps de cycle global du système important.

Aussi selon une variante de l'invention, le problème précédent est résolu selon le principe suivant : le registre à décalage d'entrée est rebouclé sur lui-même et à chaque demande issue de l'un des processeurs, on associe un indicateur véhiculé avec la demande et signalant que la demande est valide. Tant que la demande n'est pas acceptée par l'un des modules de la mémoire, la demande reste présente dans le registre à décalage, mais dès que la demande est acceptée, cet indicateur prend une autre valeur signifiant que la demande a été acceptée par un des modules. Ainsi, en fonction de la valeur de cet indicateur chaque processeur pourra déterminer s'il peut envoyer une nouvelle demande sur le registre à décalage d'entrée.

Aussi l'invention a également pour objet une unité centrale, caractérisée en ce que chaque module est associé à un circuit d'acquittement des demandes pour associer à chaque demande un indicateur de demande véhiculé par ledit registre à décalage d'entrée, ledit circuit d'acquittement des demandes forçant ledit indicateur de demande à une première valeur déterminée lorsqu'un signal d'acquittement est délivré par ledit module indiquant qu'il accepte la demande présente à son entrée et en ce que chaque étage du registre à décalage d'entrée qui est associé à un processeur a sa sortie reliée à un circuit de contrôle des demandes associé audit processeur, ledit circuit de contrôle des demandes comportant un dispositif de sélection des demandes autorisant le transfert dans l'étage du registre à décalage d'entrée placé en aval dudit processeur
- soit d'une nouvelle demande disponible en sortie dudit processeur, si la valeur dudit indicateur contenu dans ledit étage est égale à ladite première valeur déterminée,
- soit de la demande contenue dans ledit étage associé audit processeur dans le cas contraire,

l'indicateur de demande associé à tout nouvelle demande transférée dans ledit étage aval étant forcé à une seconde valeur déterminée par ledit circuit de contrôle des demandes, et en ce que la sortie du premier étage du registre à décalage d'entrée est reliée à l'entrée du dernier étage dudit registre à décalage d'entrée par l'intermédiaire du circuit d'acquittement des demandes ou du circuit de contrôle des demandes associé audit premier étage.

Un problème analogue au précédent se pose aussi dans le cas où on utilise un registre à décalage de sortie unique pour véhiculer les réponses des modules. Il peut en effet se produire des situations où une réponse contenue dans l'étage du registre à décalage placé en amont d'un module entre en conflit avec une réponse disponible en sortie de ce module.

Une solution pourrait consister à prévoir au niveau des processeurs un mécanisme de contrôle des adresses pour prévenir dans tous les cas ce genre de situation. Mais cette solution complique la tâche des processeurs, ce qui dégrade les performances.

Aussi selon une autre variante de l'invention, on résout ce problème d'une façon analogue à la solution au problème précédent. Dans ce but, l'invention concerne également une unité centrale, caractérisée en ce que chaque processeur est associé à un circuit d'acquittement des réponses pour associer à chaque réponse un indicateur de réponse véhiculé par ledit registre à décalage de sortie, ledit circuit d'acquittement des réponses forçant ledit indicateur de réponse à une première valeur déterminée lorsqu'un signal d'acquittement des réponses est délivré par ledit processeur indiquant qu'il accepte la réponse présente à son entrée et en ce que la sortie de chaque étage du registre à décalage de sortie qui est associé à un module est reliée à un circuit de contrôle des réponses (MCⱼ), ledit circuit de contrôle des réponses comportant un dispositif de sélection des réponses autorisant le transfert dans l'étage du registre à décalage de sortie placé en aval dudit module
- soit d'une réponse disponible en sortie dudit module si la valeur dudit indicateur de réponse contenu dans ledit étage est égale à ladite première valeur déterminée,
- soit de la réponse contenue dans ledit étage associé audit module dans le cas contraire,

l'indicateur de réponse associé à toute nouvelle réponse transférée dans ledit étage aval étant forcée à une seconde valeur déterminée par ledit circuit de contrôle des réponses et en ce que la sortie du premier étage du registre à décalage de sortie est reliée à l'entrée du dernier étage dudit registre à décalage de sortie par l'intermédiaire du circuit d'acquittement des réponses ou du circuit de contrôle des réponses associé audit premier étage.

D'autres caractéristiques et détails de réalisation de l'invention seront exposés dans la suite de la description en relation avec les figures où :
- La figure 1 montre un schéma de réalisation de la présente invention.
- La figure 2 montre une variante de réalisation de la présente invention.
- Les figures 3 à 6 montrent des détails de réalisation de la variante selon la figure 2.
- les figures 7 à 10 montrent des détails de réalisation d'une seconde variante de l'invention.
- La figure 11 montre un système informatique utilisant plusieurs unités centrales selon l'invention.
- Les figures 12 et 13 montrent des détails de réalisation des circuits d'interface entre plusieurs unités centrales.

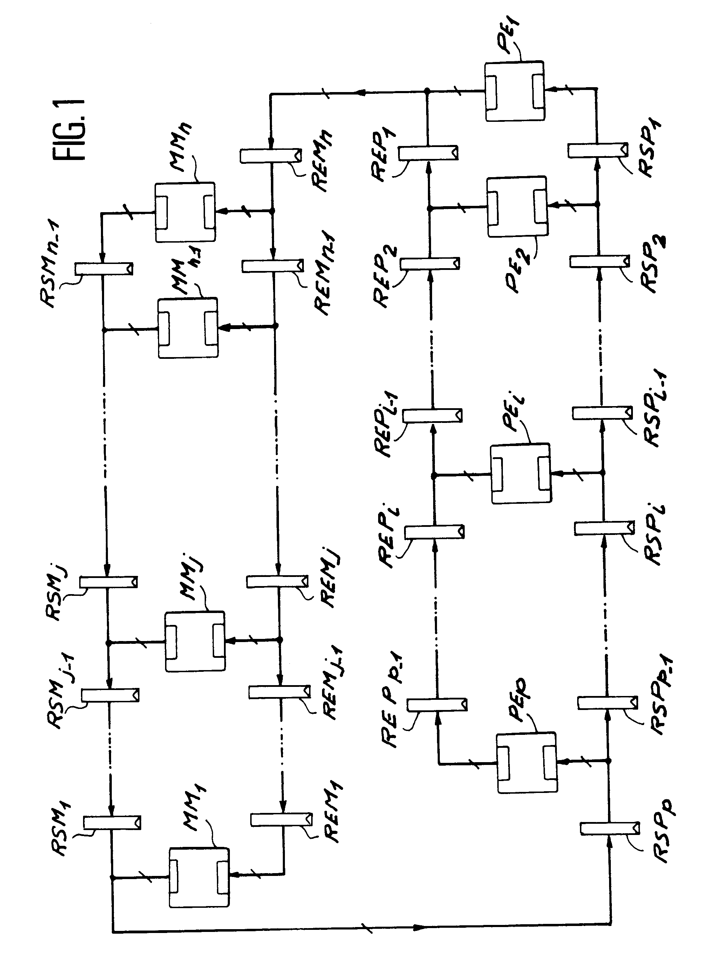

La figure 1 représente une unité centrale conformément à l'invention selon un mode de réalisation simplifié.

L'unité centrale comporte une pluralité de processeurs élémentaires PE₁, PE₂,...PEᵢ...PEp et une pluralité de modules mémoire MM1,...MMj,...MMn-1' MMn.

Chaque processeur PEᵢ comporte une interface de sortie pour émettre des demandes à destination de l'un des modules mémoire. De façon classique, une demande correspond à un ordre de lecture ou d'écriture dans le module considéré.

En général une demande est constituée en parallèle d'un code de fonction servant à définir l'opération à effectuer par la mémoire, d'une information d'adresse et, dans le cas d'une écriture, des données à écrire. La demande peut également comporter une étiquette d'origine servant à identifier la demande ou le processeur ayant émis la demande. Ces processeurs peuvent faire partie de l'unité vectorielle d'un calculateur vectoriel. Ils peuvent aussi appartenir aux unités scalaires ou même constituer les processeurs d'entrée-sortie du système.

Chaque module mémoire MMⱼ comporte une interface d'entrée pour recevoir les demandes issues des processeurs. L'interface d'entrée des modules comprend généralement un registre d'entrée servant à mémoriser les demandes reçues ainsi qu'un décodeur d'adresse pour sélectionner ce module, par exemple en réponse aux poids forts de l'adresse reçue.

Chaque module comporte également une interface de sortie comprenant un registre de sortie servant à emmagasiser les réponses prêtes destinées à l'un des processeurs.

Une réponse est constituée des données lues, dans le cas d'une lecture, ou d'un compte-rendu d'erreurs servant à informer les processeurs que l'opération demandée a été correcte ou non effectuée. Une réponse comprend également une étiquette de destination servant à identifier le processeur demandeur. Généralement, les étiquettes d'origine d'une demande et celle de destination pour la réponse correspondante sont identiques.

Chaque processeur PEᵢ comporte une interface d'entrée comprenant un décodeur d'étiquette et un registre pour receivoir les réponses issues des modules mémoire.

Conformément à l'invention, chaque demande issue de l'un des processeurs PEᵢ peut accéder aux divers modules de la mémoire par l'intermédiaire d'un registre à décalage d'entrée constitué des étages REM₁, ... REM_{I}_₁, REM_{I}, ... REMₙ₋₁, REM_{n,} REP₁, REP₂, ... REP_{I-1 ,} REP_{I}, ... REPp-1. Chaque étage, respectivement, REMⱼ ou REPᵢ du registre à décalage d'entrée a sa sortie reliée respectivement à l'entrée d'un module correspondant MMⱼ ou à la sortie d'un processeur correspondant PEᵢ et à l'entrée de l'étage aval, respectivement REM_{I-1} ou REP_{I-1}.

De la même façon, l'unité centrale comprend un registre à décalage de sortie constitué des étages RSP₁, RSP₂, ... RSP_{I-1 ,} RSP_{I}, ... RSPp-1' RSPp, RSM₁, ... RSMj- , RSMj, ... RSMₙ₋₁. Chaque étage, respectivement, RSMⱼ ou RSPi du registre à décalage de sortie a sa sortie reliée respectivement à la sortie d'un module correspondant MMⱼ ou à l'entrée d'un processeur correspondant PEᵢ et à l'entrée de l'étage aval, respectivement RSMj- ou RSPi

Chaque étage des registres à décalage d'entrée et de sortie reçoit sur son entrée d'horloge un signal d'horloge issu d'un circuit non représenté.

Nous allons maintenant décrire le fonctionnement du dispositif de la figure 1. Nous supposerons d'abord que les processeurs fonctionnement en mode parallèle, par exemple dans le cas d'une opération vectorielle et que les modules mémoire sont adressés en mode entrelacé. Dans ce cas, chaque processeur élémentaire PEᵢ peut commander simultanément, à chaque cycle d'horloge, une opération de lecture ou d'écriture et présente donc en sortie un demande correspondante. Lors de calculs vectoriels, les demandes sont normalement bien cadrées, c'est-à-dire que le premier processeur PE₁ s'adresse au premier module MM₁, le second processeur PE₂ s'adresse au second module MM₂, etc. Chaque processeur PEᵢ chargera alors l'étage REPi- du registre à décalage d'entrée qui est situé directement en aval de ce processeur. A chaque impulsion d'horloge appliqué au registre, chaque demande est décalée dans l'étage suivant. Comme nous avons n modules mémoire, après n décalages, la demande du processeur PE₁ sera présente à l'entrée du module MM₁, la demande du processeur PE₂ sera présente à l'entrée du module MM₂, etc. Ainsi, les modules pourront exécuter en parallèle les demandes qu'il leurs sont adressés. Après une durée égale au temps de cycle des modules, les réponses seront normalement disponibles en sortie de ces modules et pourront être introduites dans le registre à décalage de sortie dans le même ordre que les demandes dans le registre à décalage d'entrée. Par exemple, la réponse correspondant à la demande adressée au module MMⱼ sera introduite dans l'étage aval RSMj-1 du registre à décalage de sortie. Si p est le nombre de processeurs, la première demande issue du module MM₁ sera disponible à l'entrée du processeur PE₁ après p décalages, c'est-à-dire après p impulsions d'horloge.

Nous pouvons aussi constater qu'avec cette organisation, le temps d'accès total à une donnée est indépendant non seulement du processeurqui a émis la demande mais aussi du module destinataire.

Il convient de noter que le choix du nombre de processeurs et du nombre de modules doit tenir compte des performances respectives de chaque processeur et de chaque module. Ainsi, si le temps de cycle d'un processeur est voisin de celui d'un module mémoire, on a intérêt à choisir un nombre de modules égal au nombre de processeurs. Par contre, si les processeurs sont plus performants que les modules, chaque processeur peut envoyer des demandes à un rythme supérieur à celui auquel les modules peuvent répondre. On a alors intérêt à choisir un nombre n de modules égal à un multiple du nombre p des processeurs.

Lorsque l'unité centrale ne fonctionne pas en mode parallèle, des demandes issues des processeurs peuvent être adressées à des modules dans un ordre quelconque. Or le temps de cycle des registres à décalage est normalement prévu pour être très inférieur au temps d'accès de chacun des modules. Il faut donc éviter que deux demandes trop rapprochés s'adressent au même module. De même, il faut éviter qu'une réponse issue d'un module entre en conflit avec une réponse placée dans l'étage situé en amont de ce module. Ces situations peuvent être évitées grâce à un mécanisme de gestion des adresses commandé dans les processeurs. Cependant, cette solution présente l'inconvénient de compliquer la compilation et d'alourdir la tâche des processeurs, ce qui risque de nuire aux performances.

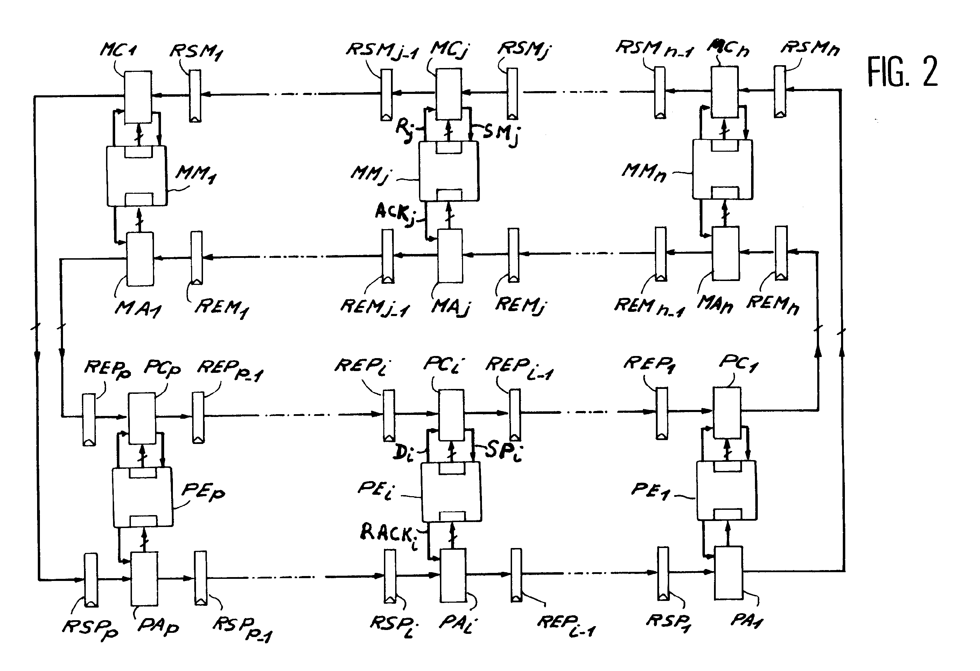

La variante de réalisation présentée à la figure 2, permet de résoudre ce problème sans présenter les inconvénients précités. Sur la figure 2, on retrouve avec les mêmes signes de références les modules mémoires, les registres à décalage d'entrée et de sortie et les processeurs. Par rapport à la figure 1, la figure 2 présente les différences suivantes.

Tout d'abord le registre à décalage d'entrée est complété par un étage supplémentaire REPp placé en aval du premier étage REM₁ du registre à décalage d'entrée.

De plus, chaque module mémoire MMⱼ est associé à un circuit MAⱼ, appelé "circuit d'acquittement des réponses", dont l'entrée est reliée à la sortie de l'étage amont REMⱼ du registre à décalage d'entrée et dont la sortie est reliée à l'entrée de l'étage aval REMj-1. Une autre sortie du circuit d'acquittement MAⱼ est relié à l'entrée du module associé MMⱼ. Le circuit d'acquittement MAⱼ reçoit également un signal d'acquittement ACKⱼ issu du module MMⱼ pour indiquer si une demande est acceptée par ce module.

Enfin, chaque processeur PEᵢ est associé à un circuit PCi appelé "circuit de contrôle des demandes" dont l'entrée est reliée à la sortie de l'étage amont REPi du registre à décalage d'entrée et dont la sortie est reliée à l'entrée de l'étage aval REPi-1. Le circuit de contrôle des demandes PCi comporte une entrée reliée à la sortie du processeur PEᵢ correspondant. Le circuit de contrôle des demandes PCi reçoit également du processeur PEᵢ un signal Di indiquant que le processeur est prêt à envoyer une nouvelle demande. Ce circuit PCi fournit enfin au processeur PEᵢ un signal SPi qui sera défini ultérieurement. Bien que cela ne soit pas visible sur la figure 2, chaque étage REPi, REMⱼ du registre à décalage d'entrée comporte, en plus des bascules affectées aux signaux de demande, une bascule supplémentaire et les liaisons entre les étages comportent une ligne supplémentaire affectée à cette bascule.

Le but de cette bascule et de cette ligne supplémentaire est de pouvoir véhiculer un indicateur binaire B dont la valeur logique indique si la demande associée est valide, c'est-à-dire si elle a été prise en compte ou non par l'un des modules de la mémoire.

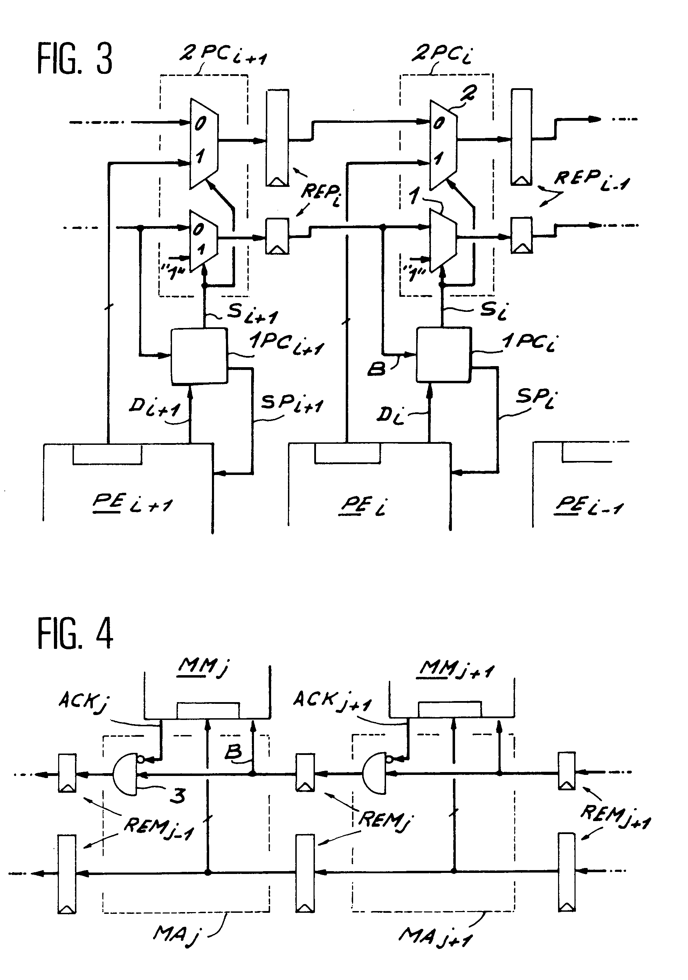

Le fonctionnement détaillé des circuits d'acquittement et des circuits de contrôle des demandes sera exposé plus en détails en référence aux figures 3 et 4. Néanmoins, on peut déjà indiquer dans les grandes lignes le fonctionnement du registre à décalage d'entrée selon la variante de la figure 2.

En supposant qu'une demande issue d'un processeur PEᵢ peut être introduite dans le registre à décalage d'entrée, le circuit de contrôle des demandes PCi délivre à sa sortie la demande proprement dite accompagnée de l'indicateur B dont la valeur logique indique la présence d'une demande valide, c'et-à-dire non encore acceptée par la mémoire. Cette demande et l'indicateur associé progressent dans le registre à décalage tant qu'ils n'ont pas atteint le module destinataire MMⱼ identifié par l'adresse. Lorsque la demande arrive dans l'étage REMⱼ placé en amont du module MMⱼ, l'adresse associée à la demande est reconnue par ce module et s'il est disponible, il transmet un signal d'acquittement ACKⱼ au circuit d'acquittement MAⱼ. Au cycle d'horloge suivant, la demande est transmise à l'étage aval mais le circuit d'acquittement force l'indicateur B à une autre valeur logique indiquant que la demande a été acceptée par le module MMⱼ. Si par contre, le module n'est pas disponible, celui-ci envoie un signal d'acquittement ACKⱼ ayant une valeur complémentaire de la précédente. Au temps d'horloge suivant, la demande est également transmise à l'étage aval mais l'indicateur B conserve sa valeur initiale. La demande et son indicateur progressent ensuite dans le registre à décalage d'entrée et grâce à l'étage supplémentaire REPp la même demande pourra à nouveau se présenter à l'entrée du module destinataire MMⱼ après un tour complet dans le registre à décalage.

Lorsque l'un des processeurs PEᵢ est prêt à envoyer une demande, il positionne son signal Dᵢ à une première valeur déterminée. Ce signal est reçu par le circuit de contrôle des demandes correspondant PCᵢ qui comporte des moyens pour tester la valeur logique de l'indicateur B contenu dans l'étage REPᵢ. Si la valeur l'indicateur B indique une demande valide, la demande et l'indicateur contenus dans le registre REPᵢ sont transmis sans modification à l'étage REPᵢ- ₁ situé en aval. PCᵢ signale par SPᵢ au processeur PEᵢ que sa demande n'est pas autorisée à être introduite dans le registre à décalage. Si par contre, l'indicateur contenu dans le registre REPᵢ indique une demande non valide, la demande du processeur PEᵢ est introduite dans l'étage REPᵢ- par l'intermédiaire du circuit PCᵢ- Le processeur est alors informé que sa demande est acceptée par le signal SPᵢ engendré par le circuit PCᵢ.

Nous voyons que cette solution résoud le problème des conflits des demandes posé précédemment car dans le cas où deux demandes trop rapprochées seraient présentées au même module mémoire, la deuxième demande qui ne peut pas être prise en compte par ce module continue à progresser dans le registre à décalage. Elle sera représentée à ce module après un nombre de décalage égal au nombre total de modules et de processeurs et une nouvelle tentative de prise en compte sera effectuée.

Par rapport à la figure 1, la réalisation selon la figure 2 présente aussi des modifications portant sur le registre à décalage de sortie.

Chaque module MMⱼ est associé à un circuit MCⱼ appelé "circuit de contrôle des réponses" relié à la sortie du module correspondant. Chaque circuit de contrôle des réponses MCⱼ a une autre entrée reliée à la sortie de l'étage RSMⱼ situé en amont du module associé MMⱼ et a sa sortie reliée à l'entrée de l'étage aval RSMⱼ- ₁. Chaque circuit de contrôle des réponses MCⱼ reçoit également un signal Rⱼ issu du module et dont la valeur logique indique la présence ou l'absence d'une réponse disponible en sortie du module.

De même, chaque processeur PEᵢ est associé à un circuit PAᵢ appelé "circuit d'acquittement des réponses" relié à l'entrée du processeur correspondant. Chaque circuit d'acquittement des réponses PAᵢ a une entrée reliée à la sortie de l'étage RSPᵢ situé en amont du module associé PEᵢ et a une autre sortie reliée à l'entrée de l'étage RSPᵢ₋₁ situé en aval. Chaque circuit d'acquittement des réponses PAᵢ reçoit un signal d'acquittement RACKᵢ issu du processeur associé et dont la valeur logique indique si la réponse a été acceptée ou non par le processeur.

La sortie du circuit d'acquittement des réponses PA₁ associé au premier processeur PE₁ est reliée à l'entrée du circuit de contrôle des réponses MCₙ associé au dernier module MMₙ par l'intermédiaire d'un étage supplémentaire RSMₙ.

Chaque circuit de contrôle des réponses MCⱼ fournit au module associé MMⱼ un signal SMⱼ qui sera défini ultérieurement.

Comme pour le registre à décalage d'entrée, chaque étage RSMⱼ, RSPᵢ du registre à décalage de sortie comprend une bascule supplémentaire (non représentée) et les liaisons reliant les étages entre eux comportent une ligne supplémentaire. Cette bascule supplémentaire et cette ligne supplémentaire permettent de véhiculer un indicateur de réponse Bᵣ ayant une première valeur logique lorsque la réponse associée a été acceptée par l'un des processeurs et une seconde valeur logique lorsque cette réponse n'a pas été acceptée.

Le registre à décalage de sortie selon la figure 2 fonctionne de la façon suivante. Lorsqu'une réponse valide, c'est-à-dire non encore acceptée par l'un des processeurs est présente dans l'étage RSPᵢ associé au processeur destinataire de cette réponse et que cette réponse peut être acceptée par le processeur, ce dernier envoie au circuit d'acquittement des réponses PA un signal RACKᵢ ayant une première valeur logique indiquant que la réponse est acceptée. Le circuit d'acquittement des réponses PA transmet alors la réponse dans l'étage aval RSP_{i-1 1} tout en forçant l'indicateur des réponses Bᵣ à une première valeur logique.

Si la réponse n'est pas acceptée par le processeur, celui-ci envoie un signal RACKᵢ ayant une deuxième valeur logique, le circuit d'acquittement des réponses PA met en communication la sortie de l'étage RSPᵢ directement avec l'entrée de l'étage aval RSPᵢ₋₁.

Lorsqu'un module MMⱼ a une réponse prête, ce dernier envoie au circuit de contrôle des réponses associé MCⱼ un signal Rⱼ ayant une première valeur logique. Si l'indicateur Bᵣ contenu dans l'étage RSMⱼ situé en amont du module a la première valeur logique déterminée, le circuit de contrôle des réponses MCⱼ met en communication la sortie du module associé avec l'entrée de l'étage RSMⱼ₋₁ situé en aval. Simultanément, le circuit de contrôle des réponses MCⱼ force l'indicateur de réponse Bᵣ associé à une deuxième valeur logique et le transmet à la bascule correspondante de l'étage aval RSMⱼ₋₁.

Si l'indicateur contenu dans l'étage situé en amont du module MMⱼ a une valeur égale à la deuxième valeur logique, la réponse disponible en sortie du module est bloquée et le contenu de l'étage amont RSMⱼ est transmis sans modification dans l'étage aval RSMⱼ₋₁.

Lorsqu'une réponse disponible dans un module MMⱼ a été introduite dans le registre à décalage de sortie ceci est signifié au module par le signal SMⱼ.

Le registre à décalage de sortie selon la figure 2 permet donc d'éviter la collision de deux réponses, l'une issue d'un module mémoire, l'autre issue de l'étage situé en amont de ce module.

La description qui précède montre que les processeurs et les modules mémoire jouent un rôle totalement symétrique. En effet, dans le cas de demandes, les processeurs jouent le rôle d'émetteur et les modules celui de récepteur. Inversement, pour les réponses, les rôles sont inversés et les modules jouent alors de rôle d'émetteurs tandis que les processeurs jouent le rôle de récepteurs.

Il convient de noter le temps total d'accès à un module mémoire augmentant avec le nombre d'étages du registre à décalage d'entrée. Cependant, l'organisation représentée sur les figures 1 et 2 n'est pas la seule possible. En effet, on peut choisir une répartition différente des processeurs et des mémoires le long des registres à décalage. Le choix de la répartition sera fonction des temps de cycle respectifs des processeurs élémentaires et des modules mémoires.

Si par exemple le temps de cycle d'un processeur est voisin du temps d'accès d'un module mémoire, il peut être avantageux d'alterner l'emplacement des processeurs et des modules. Dans ce cas, le temps total d'accès est réduit car une demande issue d'un processeur peut être adressée au module voisin sans devoir circuler tout au long du registre à décalage d'entrée.

D'une façon générale, il est aussi possible d'alterner des groupes de processeurs et des groupes de modules, les nombres respectifs de processeurs et de modules par groupe étant fonction du temps de cycle des processeurs et du temps d'accès des modules.

En référence aux figures 3 à 6, nous allons maintenant donner une description plus détaillée des circuits de contrôle des demandes PCᵢ d'acquittement des demandes MAⱼ de contrôle des réponses MCⱼ et d'acquittement des réponses PAᵢ.

Nous retrouvons sur la figure 3, le circuit de contrôle des demandes PCᵢ qui est constitué d'un circuit de sélection 2PC et d'un circuit de commandes 1 PCᵢ. Le circuit de sélection 2PC comprend un premier multiplexeur 1 à deux entrées, une première entrée recevant un signal logique fixe, l'autre entrée étant reliée à la bascule de l'étage REPᵢ contenant l'indicateur B. Un deuxième multiplexeur 2 à deux entrées a sa première entrée relié à la sortie du processeur PEᵢ et sa seconde entrée reliée aux sorties des autres bascules de l'étage REPᵢ. Les deux multiplexeurs 1 et 2 sont commandés par un signal Si issu du circuit de commandes 1 PCᵢ. Le circuit de commandes 1 PCᵢ reçoit l'indicateur B contenu dans l'étage REPᵢ et le signal Dᵢ issu du processeur PEᵢ.

Dans l'exemple de réalisation représenté, nous avons supposé que l'indicateur est une élément binaire qui lorsqu'il prend la valeur 1 logique indique que la demande est valide donc non encore acceptée par la mémoire. Lorsque l'indicateur prend la valeur 0 logique, la demand associée a été acceptée par la mémoire. Par ailleurs, nous avons supposé que lorsque le signal Si prend la valeur 1 logique, les multiplexeurs 1 et 2 mettent en communication leur entrée supérieure avec leur sortie. Enfin, nous supposerons que le signal Dᵢ prend la valeur 1 logique lorsqu'une demande est présente à la sortie du processeur.

Le circuit de contrôle des demandes fonctionne de la façon suivante. Le circuit de contrôle 1 PCᵢ délivre le signal Si avec la valeur 1 logique lorsque l'indicateur B a la valeur 0 logique et lorsque le signal Dᵢ a la valeur 1 logique. Le signal Si prend la valeur 0 logique dans les cas contraires. Ainsi, lorsque Si est égal à 1, la demande présente en sortie du processeur est transmise à la sortie du multiplexeur 2 et simultanément l'indicateur B prend la valeur 1 logique en sortie du multiplexeur 1. Si Si est égal à 0, le contenu de l'étage REPᵢ est alors présent aux sorties des multiplexeurs 1 et 2.

Un signal SPᵢ lié logiquement au signal Si est transmis au processeur PEᵢ pour l'informer si sa demande a été introduite ou non dans le registre à décalage d'entrée.

La réalisation à l'aide de circuits logiques classiques du circuit de commandes 1PCᵢ ne sera pas décrite plus en détails car elle ne présente aucune difficulté pour l'homme du métier. On peut toutefois noter qu'il conviendra de choisir une technologie adaptée aux performances du registre à décalage.

Les circuits d'acquittement MAⱼ et MAⱼ₊₁ associés aux deux modules MMⱼ et MMⱼ₊₁ sont représentés sur la figure 4. Le circuit d'acquittement MAⱼ associé au module MMⱼ est simplement constitué d'une porte logique 3 à deux entrées dont la première entrée reçoit le signal d'acquittement ACKⱼ du module associé et dont la seconde entrée est reliée à la sortie de la bascule de l'étage amont affectée à l'indicateur. La sortie de la porte 3 est reliée à l'entrée de la bascule de l'étage aval affectée à l'indicateur.

Le circuit est identique pour le circuit MAⱼ₊₁ de l'étage amont.

En fonctionnement, lorsqu'une demande est adressée au module Mⱼ et que cette demande est présente dans le registre REMⱼ, si la demande est valide c'est-à-dire si l'indicateur B contenu dans ce dernier registre a la valeur 1 logique et si la mémoire est disponible, la mémoire prend en compte la demande et délivre un signal d'acquittement ACKⱼ ayant la valeur 1 logique. La porte logique 3 délivre alors en sortie la valeur 0 logique.

Si une demande non valide, c'est-à-dire avec B égal 0, est contenue dans le registre REₙ₋ cette demande est mise directement en communication avec l'étage aval REMⱼ- sans modification de l'indicateur B.

Bien entendu, l'étage amont pourrait aussi être un processeursans entraîner de modifications pour le circuit MAⱼ.

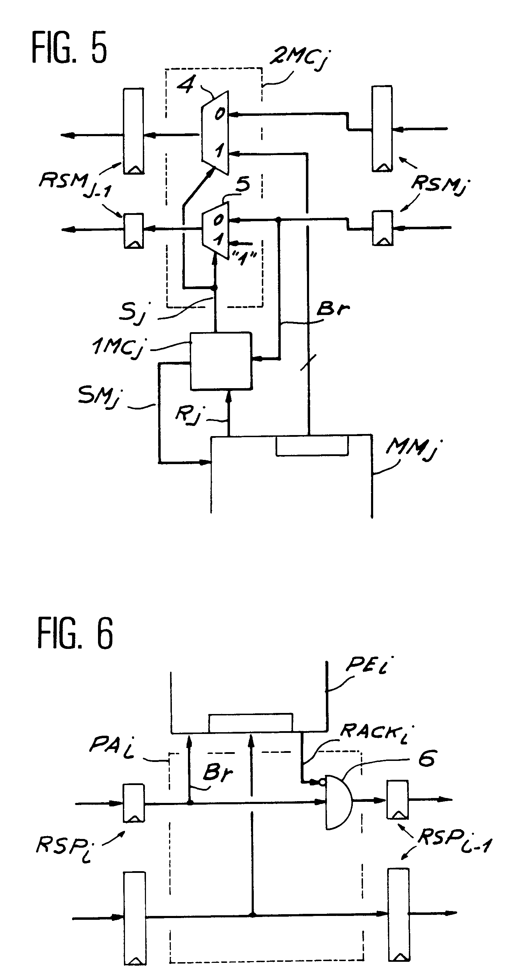

La figure 5 représente seulement le circuit de contrôle des réponses MCⱼ associé au module MMⱼ car les circuits associés aux autres modules sont identiques.

Comme pour le circuit de contrôle des demandes, le circuit de contrôle des réponses MCⱼ est constitué d'un circuit de sélection 2MCᵢ et d'un circuit de commande 1MCⱼ. Le circuit de sélection 2MCⱼ comprend deux multiplexeurs 4 et 5 à deux entrées. La première entrée du premier multiplexeur 4 est reliée à la sortie de la partie de l'étage RSMⱼ affectée à la réponse proprement dite. La seconde entrée du multiplexeur4 est reliée à la sortie du module MMⱼ. La première entrée du second multiplexeur 5 est reliée à la sortie de la bascule de l'étage RSMⱼ affectée à l'indicateur de réponse Bᵣ. Sa seconde entrée est maintenue à la valeur 1 logique.

Le circuit de commande 1 MCⱼ est relié en entrée à la sortie de la bascule de l'étage RSMⱼ contenant l'indicateur de réponse Bᵣ. Le circuit 1 MCⱼ reçoit également le signal Rⱼ du module MMⱼ. Nous supposons que le signal Rⱼ prend la valeur 1 logique lorsqu'une demande est disponible dans le module MMⱼ. La sortie Sⱼ du circuit 1 MCⱼ est reliée à l'entrée de commande des deux multiplexeurs 4 et 5. Lorsque le signal Sⱼ a la valeur 1 logique, les multiplexeurs 4 et 5 mettent en communication leur entrée inférieure avec leur sortie. Le circuit de commande 1 MCⱼ est conçu de façon à ce que, lorsque le signal Rⱼ a la valeur 1 logique et que l'indicateur Bᵣ a la valeur 0 logique, le signal Sⱼ prend la valeur 1 logique autorisant ainsi le transfert de la réponse présente dans l'interface de sortie du module MMⱼ dans l'étage aval RSMⱼ₋₁. Simultanément, l'indicateur Bᵣ fourni à cet étage prend la valeur 1 logique.

Si l'indicateur de réponse Bᵣ contenu dans l'étage RSMⱼ a la valeur 1 logique, signifiant ainsi que la réponse est valide, le circuit de commande 1 MCᵢ délivre un signal SMᵢ au module MMⱼ pour informer ce module que la réponse ne peut pas être introduite dans le registre à décalage de réponse. De plus, le signal Sⱼ prend la valeur 0 logique et la demande contenue dans l'étage RSMⱼ est intégralement transférée dans le registre aval RSMⱼ₋₁.Il en résulte que l'indicateur de réponse introduit dans le registre aval conserve la valeur 1 logique. Bien entendu, si aucune réponse n'est disponible dans le module MMⱼ, le signal Rⱼ prenant alors la valeur 0 logique, le signal Sⱼ prend la valeur 0 logique autorisant ainsi le transfert sans modification de la demande et de l'indication contenus dans l'étage RSMⱼ vers l'étage aval RSMⱼ₋₁.

La figure 6 représente un mode de réalisation du circuit d'acquittement des réponses PAᵢ associé au processeur PEᵢ.

Le circuit d'acquittement des réponses PAᵢ comprend essentiellement une porte logique 6 recevant sur une première entrée l'indicateur Bᵣ contenu dans l'étage RSPᵢ du registre à décalage de sortie. La porte 6 reçoit sur sa seconde entrée le signal RACKᵢ issu du processeur PEᵢ. La sortie de la porte 6 est reliée à l'entrée de l'étage aval RSPᵢ. du registre à décalage de réponse.

Conformément à la convention exposée précédemment, lorsque l'indicateur Bᵣ a la valeur 1 logique, cela signifie que la réponse associée est valide c'est-à-dire qu'elle n'a pas été acceptée par le processeur.

On suppose également que le signal RACKᵢ prend la valeur 1 logique lorsque le processeur PEᵢ accepte une demande valide.

Compte tenu de cette convention, le fonctionnement du circuit d'acquittement des réponses est le suivant. Lorsqu'une réponse contenue dans le registre RSPᵢ est destinée au processeur PEᵢ et est associée à un indicateur de réponse Bᵣ dont la valeur logique est égale à 1, cela signifie que cette réponse valide devrait être prise en compte par le processeur. Si tel est le cas, le signal RACKᵢ délivré parle processeur prend la valeur 1 logique et le circuit 5 délivre en sortie la valeur 0 logique. Dans le cas contraire, le signal RACKᵢ a la valeur 0 logique et la sortie du circuit 6 prend la valeur 1 logique signifiant ainsi que la demande n'a pas été acceptée par le processeur. Si par contre, l'indicateur Bᵣ contenu dans le registre RSPᵢ a la valeur 0 logique, la sortie 6 prend la valeur 0 logique également.

Nous avons vu précédemment que les circuits de contrôle des demandes ou de contrôle des réponses nécessitent la lecture des indicateurs placés dans les registres associés aux processeurs ou aux modules ainsi que l'actionnement de multiplexeurs. Or si le registre à décalage fonctionne à une fréquence très élevée, il devient difficile de réaliser des circuits de contrôle suffisamment rapides pour suivre le rythme du décalage. Il convient donc de prévoir un mécanisme d'anticipation permettant à ces contrôleurs de déterminer les conditions de transfert des demandes ou des réponses avec une période d'horloge d'avance.

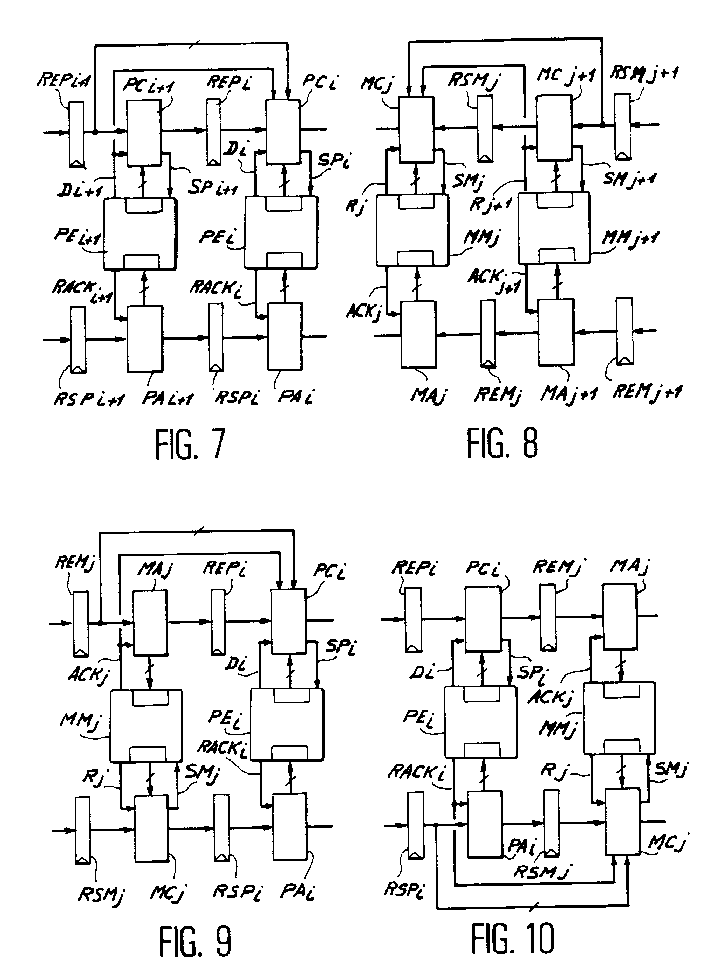

Les figures 7 à 10 montrent une variante de réalisation permettant cette anticipation. La figure 7 représente le cas où un processeur PEᵢ est placé immédiatement en aval d'un autre processeur PEᵢ₊₁. La figure 8 représente le cas où un module MMⱼ est placé immédiatement en aval d'un autre module MMⱼ₊₁. La figure 9 représente le cas où un processeur PEᵢ est placé immédiatement en aval d'un module MMⱼ. La figure 10 représente enfin le cas où un module MMⱼ est placé immédiatement en aval d'un processeur PEᵢ. Sur les figures 7 à 10, nous retrouvons avec les mêmes références les éléments déjà représentés sur la figure 2. Cependant, les circuits de contrôle ont des fonctions modifiées et comportent des entrées supplémentaires qui sont reliées aux sorties de l'étage situé en amont du module ou du processeur précédent et à la sortie d'acquittement ou de requête de ce module ou de ce processeur précédent.

Dans le cas prévu à la figure 7, le processeur PEᵢ est précédé par un autre processeur PEᵢ₊₁. Le circuit de contrôle des demandes PCᵢ est relié à la sortie de l'étage REPᵢ₊₁ du registre à décalage d'entrée. Ce contrôleur reçoit également le signal Dᵢ₊₁ issue du processeur PEᵢ₊₁.

Le contrôleur des demandes PCᵢ sera conçu de façon à autoriser le transfert d'une demande du processeur PEᵢ dans le registre à décalage d'entrée que dans le cas où aucune réponse valide n'est présente en amont du processeur PEᵢ₊₁ et à condition qu'aucune demande ne soit présente en sortie de ce processeur. Cette condition peut être facilement détectée au moyen de circuits logiques sensibles à l'indicateur B contenu dans l'étage REPᵢ₊₁ et au signal Dᵢ₊₁ indiquant qu'une demande est en instance dans le processeur PEᵢ₊₁.

La situation est analogue dans le cas représenté à la figure 8 et qui concerne les réponses. Le circuit de contrôle des réponses MCⱼ associé au module MMⱼ autorisera le transfert d'une réponse disponible dans ce module lorsqu'aucune réponse valide n'est présente en amont du module précédent MMⱼ₊₁ et qu'aucune réponse n'est disponible dans ce module. Cette condition est déterminée par le circuit MCⱼ en fonction de l'indicateur de réponse Bᵣ contenu dans l'étage RSMⱼ₊₁ et du signal Rⱼ₊₁ indiquant qu'une réponse est disponible dans le module MMⱼ₊₁.

Dans le cas de la figure 9, le processeur PEᵢ est placé en aval d'un module MMⱼ et le circuit de contrôle des demandes PCᵢ associé au processeur PEᵢ est relié à la sortie de l'étage REMⱼ associé au module MMⱼ. Le circuit PCᵢ reçoit également le signal ACKⱼ délivré par le module MMⱼ. Le circuit de contrôle des demandes PCᵢ est alors conçu de façon à ce qu'une demande issue du processeur PEᵢ soit autorisée à être introduite dans le registre à décalage d'entrée lorsqu'une demande contenue dans l'étage REMⱼ n'est pas valide (Br = 0) ou lorsque cette demande est valide alors que le signal ACKⱼ indique que cette demande sera acceptée par le module MMⱼ car celle-ci est destinée à ce module et ce module est disponible.

Enfin, dans le cas de la figure 10, le circuit de contrôle des réponses MCⱼ associé au module MMⱼ reçoit l'indicateur Bᵣ contenu dans l'étage RSPᵢ associé à un processeur PEᵢ placé en amont de ce module. Le signal RACKᵢ issu du processeur PEᵢ est également appliqué à l'entrée du contrôleur de réponse MCⱼ. Le circuit de contrôle des réponses MCⱼ autorisera l'introduction dans le registre à décalage de réponse d'une réponse disponible en sortie du module MMⱼ lorsque la réponse contenue dans l'étage RSPᵢ n'est pas valide (Bᵣ = 0) ou lorsque cette réponse est valide alors que le signal RACKᵢ indique que cette réponse sera acceptée acceptée par le processeur PEᵢ car celle-ci est destinée à ce processeur et ce processeur est disponible.

La réalisation des circuits de contrôle des demandes et des réponses selon cette variante est tout à fait à la portée de l'homme du métier compte tenu des explications déjà données. Il est donc inutile d'en donner une description plus détaillée.

D'autre part, il convient de noter que les modes de réalisation décrits jusqu'à présent supposaient que l'interface d'entrée des modules et des processeurs comportait des circuits de décodage sensibles aux poids forts de l'adresse ou à l'étiquette reçus pour commander la prise en compte de la demande ou de la réponse et pour engendrer les signaux d'acquittement correspondants ACKⱼ, RACK. Toutefois, l'invention ne se limite pas à ces cas particuliers et les solutions équivalentes ne sortent pas du cadre de l'invention.

Par exemple, on pourrait aussi choisir des modules mémoire munis d'interface d'entrée sans décodeur et sans circuit d'acquittement. Il conviendrait alors d'inclure ces fonctions dans chaque circuit d'acquittement des demandes MAⱼ pour obtenir le même résultat.

L'unité décrite précédemment a une capacité de traitement proportionnelle au nombre de processeurs et au nombre de modules qui la constituent. Si l'on veut augmenter cette capacité, on est donc amener à multiplier le nombre de processeurs et de modules. Or le temps qui s'écoule entre l'envoi du demande par un processeur et le momentoù celui-ci reçoit la réponse est fonction du nombre d'étage des registres à décalage donc du nombre de processeurs et de modules. Il ne sera donc pas possible d'augmenter indéfiniment la puissance de l'unité centrale par une simple augmentation du nombre des processeurs et des modules.

Aussi selon un autre aspect de l'invention, ce problème est résolu en prévoyant une architecture de système utilisant une pluralité d'unités centrales ayant chacunes un nombre limité de processeurs et de modules.

Chaque unité centrale pourra alors travailler en mode local avec de très bonnes performances. Cependant, il faut prévoir des moyens pour que chaque unité centrale puisse communique avec les autres.

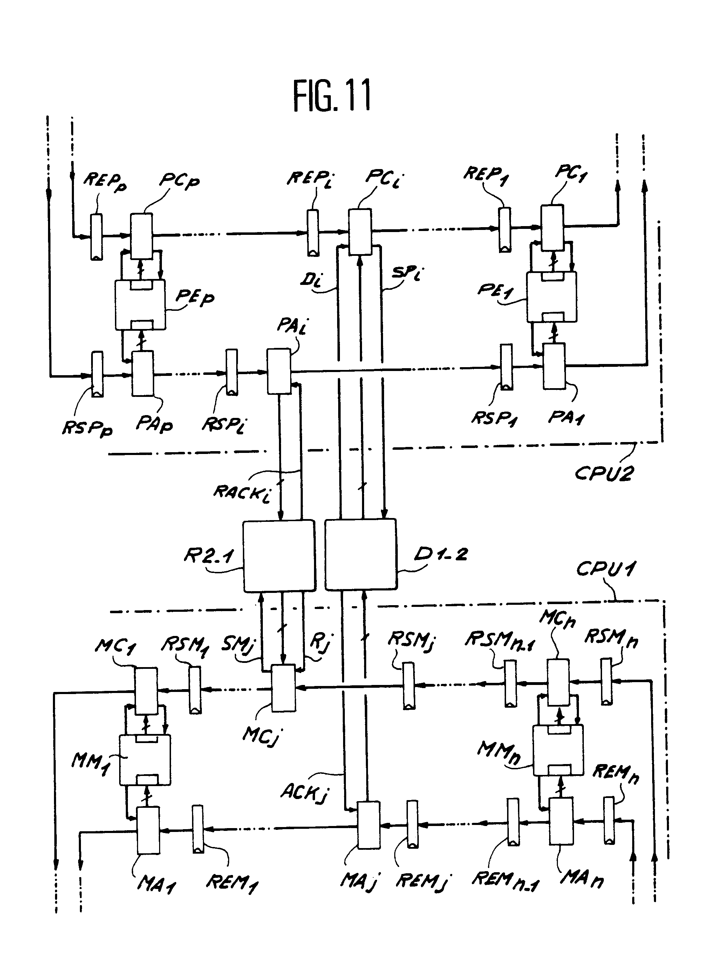

La figure 11 montre l'interconnexion entre deux unités centrales CPU₁ et CPU₂. L'unité centre CPU₁ a une constitution identique à l'une de celles qui ont été décrites précédemment mais où un étage du registre à décalage d'entrée et un étage du registre à décalage de sortie sont utilisés pour réaliser l'interface avec l'autre unité centrale CPU₂.

La figure 11 montre les moyens à utiliser pour que l'unité centrale CPU₁ puisse transmettre des demandes à l'unité centrale CPU₂ et pour que CPU₂ puisse fournir les réponses à CPU₁. Ainsi, le registre à décalage d'entrée de la première unité CPU₁ communique avec le registre à décalage d'entrée de la deuxième unité centrale CPU₂ par l'intermédiaire d'un circuit d'acquittement des demandes MAⱼ conforme à l'une des descriptions précédentes et d'un circuit d'interface des demandes D1-2 qui est lui-même relié à un circuit de contrôle des demandes PCᵢ de la deuxième unité centrale CPU₂. Inversement le registre à décalage de sortie de la deuxième unité centrale CPU₂ communique avec le registre à décalage de sortie de la première unité centrale CPU₁ par l'intermédiaire d'un circuit d'acquittement des réponses PA,, d'un circuit d'interface des réponses R2-1 et d'un circuit de contrôle des réponses MCⱼ du registre à décalage de sortie de la première unité centrale CPU₁.

Les circuits d'interface D1-2 et R2-1 sont conçus selon la règle suivante. L'ensemble constitué par l'interface des demandes D1-2, la seconde unité centrale CPU₂ et l'interface des réponses R2-1 doit être vu par la première unité centrale CPU₁ comme s'il s'agissait d'un module mémoire. Inversement, l'ensemble constitué par l'interface de réponse R2-1, la première unité centrale CPU₁, et l'interface de demandes D1-2 doit être vu par la seconde unité centrale CPU₂ comme s'il s'agissait d'un processeur.

Bien entendu, il est possible de symétriser les rôles des deux unités centrales en prévoyant un autre couple d'interface pour permuter les rôles des deux unités centrales. Il est également possible de faire communiquer l'une des unités centrales avec d'autres et ainsi de constituer un véritable réseau d'unités centrales.

Ces possibilités d'interconnexions entre plusieurs unités peuvent être utilisées de diverses façons.

On peut prévoir, parexemple, que la seconde unité centrale CPU₂ est composée uniquement de modules mémoire. Dans ce cas, CPU₂ sert de mémoire secondaire, tandis que les modules mémoire du CPU₁ jouent le rôle de mémoire de travail. D'une façon générale, il est ainsi possible de réaliser un système de mémoires hiérarchisées en prévoyant une troisième unité composée aussi de modules reliée à CPU₂ puis une quatrième unité reliée à la troisième, etc....

Selon un autre exemple d'application, la seconde unité centrale CPU₂ comprend des processeurs spécialisés et fonctionne alors comme un co-processeur capable de sous-traiter des applications spécifiques pour CPU₁.

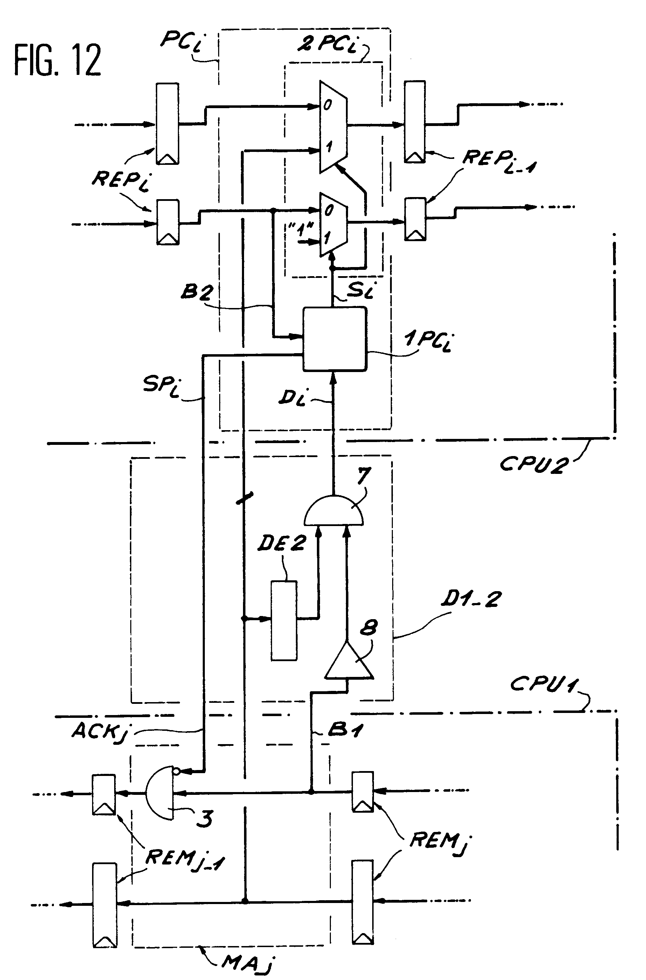

La figure 12 montre de façon plus détaillée un exemple de réalisation de la liaison entre le registre à décalage d'entrée de la première unité centrale CPU₁ avec le registre à décalage d'entrée de l'unité central CPU₂. Les éléments PCᵢ, MAⱼ, REᵢ appartenant aux deux unités centrales ont déjà été décrits en relation avec les figures 3 et 4. L'interface des demandes D1-2 comprend un décodeur DE₂ dont l'entrée est reliée à la sortie d'un étage REⱼ du registre à décalage d'entrée de la première unité centrale CPU₁. Ce décodeur réçoit en entrée l'adresse de destination de la demande contenue dans l'étage REⱼ et délivre un signal dont le valeur indique si cette adresse est destinée à la seconde unité centrale. L'interface D1-2 comporte un amplificateur 8 qui reçoit l'indicateur de demande B₁ contenu dans l'étage REⱼ. Si la demande est bien destinée à l'unité CPU₂ et si la demande est valide (B₁ = 1), la porte ET 7 qui reçoit les signaux de sortie du décodeur DE₂ et de l'amplificateur 8 délivre le signal Dᵢ appliqué au circuit de commande 1 PCᵢ du circuit de contrôle des demandes PCᵢ de la deuxième unité centrale CPU₂. La signification du signal Dᵢ a déjà été expliquée en relation avec la figure 3. Le signal SPᵢ engendré par le circuit de commande 1 PCᵢ sert alors de signal ACKⱼ appliqué à la porte 3. Ainsi, pour l'unité centrale CPUᵢ, le circuit d'interface des demandes D1-2 se comporte comme une interface d'entrée d'un module mémoire. Inversement, pour l'unité centrale CPU₂, l'interface D1-2 se comporte comme l'interface de sortie d'un processeur.

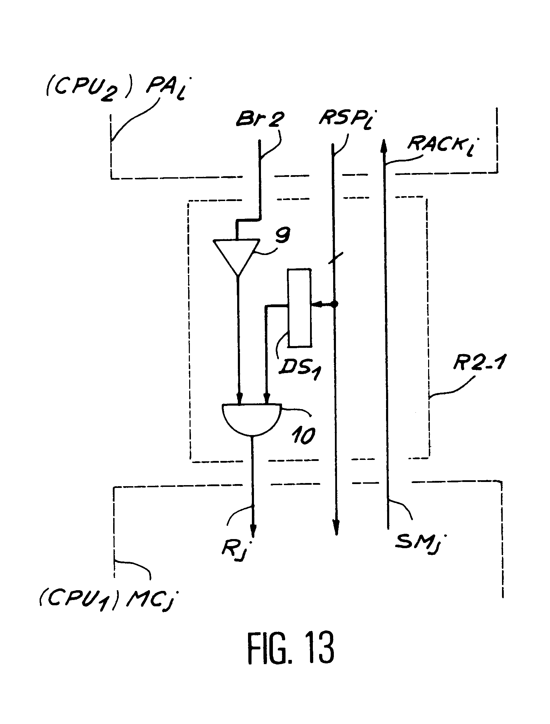

Le circuit d'interface des réponses R2-1 représenté à la figure 13 est identique, du point de vue fonctionnel, au circuit D1-2.

Le circuit d'interface des réponses R2-1 comprend un décodeur de sortie DS₁, un amplificateur 9 et une porte ET 10. L'entrée du décodeur DS₁ est reliée à la sortie d'un étage RSPᵢ du registre à décalage de sortie de la seconde unité centrale CPU₂ et délivre un signal indiquant si la réponse est destinée à l'unité centrale CPU₁. La porte ET reçoit ce signal ainsi que le signal de sortie de l'amplificateur 9 qui est représentatif de l'indicateur de réponse Bᵣ 2 extrait de l'étage RSPᵢ de la seconde unité centrale CPU₂. La porte ET 10 fournit le signal Rⱼ déjà défini en relation avec la figure 5. Ce signal Rⱼ est appliqué au circuit de commande 1MCⱼ d'un circuit de contrôle des réponses MCⱼ de la première unité centrale CPU₁. En retour, ce circuit de commande fournit le signal SMⱼ déjà défini servant de signal RACKᵢ appliqué au circuit d'acquittement des réponses PAᵢ de la deuxième unité centrale CPU₂.

Ainsi, l'interface de réponse R2-1 se comporte pour la seconde unité centrale CPU₂ comme l'interface d'entrée d'un processeur et pour l'unité centrale CPU₁ comme l'interface de sortie d'un module mémoire.

Bien entendu, les figures 12 et 13 ne sont que des exemples de réalisation dont surtout l'aspect fonctionnel importe.

## Revendications

1. Unité centrale pour système de traitement de l'information, ladite unité comprenant plusieurs processeurs (PEᵢ) associés à plusieurs modules mémoires (MMⱼ) destinés à recevoir des demandes desdits processeurs (PEᵢ), lesdits demandes ayant la forme de signaux de commande, d'adressage et éventuellement de données, chaque module (MMⱼ) comprenant des moyens pour décoder lesdites demandes apparaissant sur son entrée et des moyens pourfournirdes signaux de réponse auxdites demandes, ladite unité centrale étant caractérisée en ce que les demandes issues de chaque processeur (PEᵢ) sont transmises à l'entrée de chacun desdits modules (MMᵢ) par l'intermédiaire d'un registre à décalage d'entrée (REM₁, ..., REMj, ... REMₙ,... REP₁, ... REPᵢ, ... REPₚ- ₁), en ce que les réponses issues de chacun desdits modules (MMⱼ) sont transmises à l'entrée de chaque processeur (PEᵢ) par l'intermédiaire d'un registre à décalage de sortie (RSP₁, ... RSP,, ... RSPp, ... RSM₁, ... RSMⱼ, ... RSM_{n- 1}), en ce que, pour tout processeur (PEᵢ) donné, le nombre d'étages dudit registre à décalage d'entrée permettant d'accéder aux modules (MMⱼ) est différent pour chacun des modules (MMⱼ) et en ce que, pour tout processeur (PEᵢ), le nombre total d'étages (REP,, REMⱼ, RSP,, RSMⱼ) appartenant aux registres à décalage d'entrée et de sortie associés à l'un desdits modules (MMⱼ) est constant et indépendant du module et du processeur considérés.

2. Unité centrale selon la revendication 1, caractérisée en ce qu'elle comporte un seul registre à décalage d'entrée et un seul registre à décalage de sortie, en ce que chaque processeur (PEᵢ) et chaque module (MMⱼ) est associé à un étage (REP,, REMⱼ) dudit registre à décalage d'entrée et à un étage (RSP, RSMⱼ) du registre à décalage de sortie, en ce que la sortie de chaque processeur (PEᵢ) est reliée à la sortie de l'étage associé (REPᵢ) du registre à décalage d'entrée, en ce que la sortie de chaque module (MMⱼ) est reliée à la sortie de l'étage associé (RSMⱼ) du registre à décalage de sortie, en ce que l'entrée de chaque processeur est reliée à la sortie de l'étage associé (RSP) du registre à décalage de sortie et en ce que l'entrée de chaque module est reliée à la sortie de l'étage associé (REMⱼ) du registre à décalage d'entrée.

3. Unité centrale selon la revendication 2, caractérisée en ce que chaque module (MMⱼ) est associé à un circuit d'acquittement des demandes (MAⱼ) pour associer à chaque demande un indicateur de demande (B) véhiculé par ledit registre à décalage d'entrée, ledit circuit d'acquittement des demandes (MAⱼ) forçant à une première valeur déterminée ledit indicateur de demande (B) lorsqu'un signal d'acquittement (ACKⱼ) est délivré par ledit module (MMⱼ) indiquant qu'il accepte la demande présente à son entrée et en ce que chaque étage (REPᵢ) du registre à décalage d'entrée qui est associé à un processeur (PEi) à sa sortie reliée à un circuit de contrôle des demandes (PCᵢ) associé audit processeur (PEᵢ), ledit circuit de contrôle des demandes (PCᵢ) comportant un dispositif de sélection des demandes (2PCᵢ) autorisant le transfert dans l'étage (REPᵢ₋₁) du registre à décalage d'entrée placé en aval dudit processeur (PEᵢ)
- soit d'une nouvelle demande disponible en sortie dudit processeur (PEᵢ), si la valeur dudit indicateur (B) contenu dans ledit étage (REPᵢ) est égale à ladite première valeur déterminée,
- soit de la demande contenue dans ledit étage (REPᵢ) associé audit processeur (PEᵢ) dans le cas contraire,
l'indicateur de demande (B) associé à toute nouvelle demande transférée dans ledit étage aval (REP_{i- 1}) étant forcé à une seconde valeur déterminée par ledit circuit de contrôle des demandes (PC),
et en ce que la sortie du premier étage (REM₁;REP₁) du registre à décalage d'entrée est reliée à l'entrée du dernier étage (REPp;REMₙ) dudit registre à décalage d'entrée par l'intermédiaire du circuit d'acquittement des demandes (MAᵢ) ou du circuit de contrôle des demandes (PCᵢ) associé audit premier étage.

4. Unité centrale selon la revendication 3, caractérisée en ce que le circuit de contrôle des demandes (PCᵢ) d'un processeur (PEᵢ) est relié à la sortie de l'étage (REPᵢ₊₁, REMⱼ) placé en amont de l'étage (REPᵢ) du registre à décalage d'entrée associé audit processeur (PEᵢ), en ce que ledit circuit de contrôle des demandes (PCᵢ) commande ledit dispositif de sélection des demandes (2PCᵢ) pour autoriser le transfert d'une nouvelle demande dudit processeur à l'entrée de l'étage (REPᵢ₋₁) du registre à décalage d'entrée placé en aval dudit processeur (PEᵢ) dans les cas suivants:
a) ledit étage amont (REMⱼ) est associé à un module (MMⱼ) et contient un indicateur de demande (B) dont la valeur est égale à ladite première valeur déterminée, ou bien la valeur dudit indicateur (B) est égale à ladite seconde valeur déterminée et la demande contenue dans ledit étage amont (REMⱼ) adresse ledit module (MMⱼ) et ledit module (MMⱼ) est disponible,
b) ledit étage amont (REPᵢ₊₁) est associé à un processeur (PEᵢ₊₁) et contient un indicateur de demande (B) dont la valeur est égale à ladite première valeur déterminée et aucune demande n'est prête en sortie dudit processeur amont (PEᵢ₊₁).

5. Unité centrale selon l'une des revendications 2 à 4, caractérisée en ce que chaque processeur (PEᵢ) est associé à un circuit d'acquittement des réponses (PAᵢ) pour associer à chaque réponse un indicateur de réponse (Bᵣ) véhiculé par ledit registre à décalage de sortie, ledit circuit d'acquittement des réponses (PAᵢ) forçant ledit indicateur de réponse (Bᵣ) à une première valeur déterminée lorsqu'un signal d'acquittement des réponses (RACK) est délivré par ledit processeur (PEᵢ) indiquant qu'il accepte la réponse présente à son entrée et en ce que la sortie de chaque étage (RSMⱼ) du registre à décalage de sortie qui est associé à un module (MMⱼ) est reliée à un circuit de contrôle des réponses (MCⱼ), ledit circuit de contrôle des réponses (MCⱼ) comportant un dispositif de sélection des réponses (2MCⱼ) autorisant le transfert dans l'étage (RSM_{j- 1}) du registre à décalage de sortie placé en aval dudit module (MMⱼ)
- soit d'une réponse disponible en sortie dudit module (MMⱼ) si la valeurdudit indicateur de réponse (Bᵣ) contenu dans ledit étage (RSMⱼ) est égale à ladite première valeur déterminée,
- soit de la réponse contenue dans ledit étage (RSMⱼ) associé audit module (MMⱼ) dans le cas contraire,
l'indicateur de réponse (Bᵣ) associé à toute nouvelle réponse transférée dans ledit étage aval (RSM_{j- 1}) étant forcée à une second valeur déterminée par ledit circuit de contrôle des réponses (MCⱼ), et en ce que la sortie du premier étage (RSP₁;RSMₙ) du registre à décalage de sortie est reliée à l'entrée du dernier étage (RSMₙ;RSPp) dudit registre à décalage de sortie par l'intermédiaire du circuit d'acquittement des réponses (PA₁) ou du circuit de contrôle des réponses (MCᵢ) associé audit premier étage.

6. Unité centrale selon la revendication 5, caractérisé en ce que le circuit de contrôle des réponses (MCⱼ) d'un module (MMⱼ) est relié à la sortie de l'étage (RSMⱼ₊₁, RSPᵢ) placé en amont de l'étage (RSMⱼ) du registre à décalage de sortie associé audit module (MMⱼ), en ce que ledit circuit de contrôle des réponses (MCⱼ) commande le dispositif de sélection des réponses de (MCⱼ) pour autoriser le transfert d'une nouvelle réponse dudit module (MMⱼ) à l'entrée de l'étage (RSMⱼ- ₁) du registre à décalage de sortie placé en aval dudit module (MMⱼ) dans les cas suivants :
a) ledit étage amont (RSPᵢ) est associé à un processeur (PEᵢ) et contient un indicateur de réponse (Bᵣ) dont la valeur est égale à ladite première valeur déterminée, ou bien, la valeur dudit indicateur (Bᵣ) est égale à ladite seconde valeur déterminée et la réponse contenue dans ledit étage amont (RSPᵢ) est destinée audit processeur (PEᵢ) et ledit processeur (PEᵢ) est disponible,
b) ledit étage amont (RSMⱼ₊₁) est associé à un module (MMⱼ₊₁) et contient un indicateur de réponse (Bᵣ) dont la valeur est égale à ladite première valeur déterminée et aucune réponse n'est prête en sortie dudit module amont (MMⱼ₊₁).

7. Unité centrale selon l'une des revendications précédentes, caractérisée en ce que les demandes contiennent en parallèle un code de fonction servant à définir l'opération à effectuer dans l'un des modules (MMⱼ), une information d'adresse, des données dans le cas d'une écriture et une étiquette d'origine dans le cas d'une lecture, ladite étiquette d'origine étant représentative de l'identité du processeur (PEᵢ) qui envoie la demande, et en ce que les réponses contiennent en parallèle une étiquette de destination correspondant à l'étiquette d'origine pour la demande considérée, des données dans le cas d'une lecture, ou un compte-rendu d'erreurs.

8. Système de traitement de l'information, caractérisé en ce qu'il comprend une pluralité d'unités centrales selon l'une des revendications 1 à 7 et en ce que une première unité centrale (CPU₁) transmet des demandes à une seconde unité centrale (CPU₂) par l'intermédiaire d'un circuit d'interface des demandes (D1-2) fonctionnant comme l'interface d'entrée d'une mémoire de ladite première unité centrale (CPU₁) et comme l'interface de sortie d'un processeur de ladite autre unité centrale (CPU₂) et en ce que ladite seconde unité centrale (CPU₂) transmet ses réponses à une autre unité centrale (CPU₁) par l'intermédiaire d'un circuit d'interface des réponses (R2-1) fonctionnant comme l'interface d'entrée d'un processeur de la seconde unité centrale (CPU₂) et comme l'interface de sortie d'une mémoire de ladite autre unité centrale (CPU₁).

9. Système de traitement de l'information selon la revendication 8, caractérisé en ce que ledit circuit d'interface des demandes (D1-2) comporte un décodeur (DE2) dont l'entrée est reliée à la sortie d'un étage (REMⱼ) du registre à décalage d'entrée d'une première unité centrale (CPU₁), ledit décodeur (DE2) d'entrée permettant de détecter si la demande contenue dans ledit étage (REMⱼ) est destinée à une seconde unité centrale (CPU₂) et en ce que le circuit d'interface des réponses (R₂-₁) comporte un décodeur de sortie (DSᵢ) dont l'entrée est reliée à la sortie d'un étage (RSPᵢ) du registre à décalage de sortie de la seconde unité centrale (CPU₂), ledit décodeur de sortie (DSᵢ) permettant de détecter si la réponse contenue dans ledit étage (RSPᵢ) du registre à décalage de sortie de la seconde unité centrale (CPU₂) est destinée à l'unité centrale (CPU₁) à laquelle ledit décodeur de sortie est relié.

## Patentansprüche

1. Zentraleinheit für ein Informationsverarbeitungssystem mit mehreren Prozessoren (PEᵢ), die mehreren Speichermodulen (MMⱼ) zugeordnet sind, die für den Empfang von Anforderungen der Prozessoren (PEᵢ) bestimmt sind, wobei die Anforderungen die Form von Steuer-, Adressierungs-und eventuell Datensignalen besitzen und jedes Modul (MMⱼ) Mittel zum Decodieren derAnforderungen, die an seinem Eingang auftreten, und Mittel zurAbgabe von Antwortsignalen auf die Anforderungen umfaßt, dadurch gekennzeichnet, daß die von jedem Prozessor (PEᵢ) abgegebenen Anforderungen über ein Eingangsschieberegister (REM₁, ..., REMj, ... REMₙ, ... REP₁, ... REPᵢ, ... REP_{p- 1}) zu dem Eingang eines jeden der Module (MMᵢ) übertragen werden, daß die von jedem der Module (MMⱼ) abgegebenen Antworten über ein Ausgangsschieberegister (RSP₁, ... RSPᵢ, ... RSPp, ... RSM₁, RSMⱼ, ... RSMₙ₋₁) zu dem Eingang eines jeden Prozessors (PEᵢ) übertragen werden, daß, für jeden gegebenen Prozessor(PEᵢ), die Anzahl von Stufen des Eingangsschieberegisters, das es gestattet, auf die Module (MMⱼ) zuzugreifen, für jeden der Module (MMⱼ) verschieden ist und daß, für jeden Prozessor (PEᵢ), die Gesamtzahl von Stufen (REPᵢ, REMⱼ, RSPᵢ, RSMⱼ), die zu den Eingangs- und Ausgangsschieberegistern gehören und einem der Module (MMⱼ) zugeordnet sind, konstant und unabhängig von dem betreffenden Modul und dem betreffenden Prozessor ist.

2. Zentraleinheit nach Anspruch 1, dadurch gekennzeichnet, daß sie ein einziges Eingangsschieberegister und ein einziges Ausgangsschieberegister umfaßt, daß jeder Prozessor (PEᵢ) und jedes Modul (MMⱼ) einer Stufe (REPᵢ, REMⱼ) des Eingangsschieberegisters und einer Stufe (RSPᵢ, RSMⱼ) des Ausgangsschieberegisters zugeordnet ist, daß der Ausgang eines jeden Prozessors (PEᵢ) mit dem Ausgang der zugeordneten Stufe (REPᵢ) des Eingangsschieberegisters verbunden ist, daß derAusgang eines jeden Moduls (MMⱼ) mit dem Ausgang der zugeordneten Stufe (RSMⱼ) des Ausgangsschieberegisters verbunden ist, daß der Eingang eines jeden Prozessors mit dem Ausgang der zugeordneten Stufe (RSPᵢ) des Ausgangsschieberegisters verbunden ist und daß der Eingang eines jeden Moduls mit dem Ausgang der zugeordneten Stufe (REMⱼ) des Eingangsschieberegisters verbunden ist.

3. Zentraleinheit nach Anspruch 2, dadurch gekennzeichnet, daß jedem Modul (MMⱼ) ein Anforderungsbestätigungsschaltkreis (MAⱼ) zugeordnet ist, um jeder Anforderung einen Anforderungsindikator (B) zuzuordnen, der über das Eingangsschieberegister übertragen wird, wobei der Anforderungsbestätigungsschaltkreis (MAⱼ) dem Anforderungsindikator (B) einen ersten vorgegebenen Wert auferlegt, wenn ein Bestätigungssignal (ACKⱼ) von dem Modul (MMⱼ) geliefert wird, was angibt, daß er die an seinem Eingang vorhandene Anforderung annimmt, und daß jede Stufe (REPᵢ) des Eingangsschieberegisters, die einem Prozessor (PEᵢ) zugeordnet ist, an ihrem Ausgang mit einem dem Prozessor (PEᵢ) zugeordneten Anforderungssteuerschaltkreis (PCᵢ) verbunden ist, wobei derAnforderungssteuerschaltkreis (PCᵢ) eine Anforderungsauswahleinrichtung (2PCᵢ) aufweist, die die Übertragung
- entweder einer neuen, am Ausgang des Prozessors (PEᵢ) verfügbaren Anforderung, wenn der Wert des in der Stufe (REPᵢ) enthaltenen Indikators (B) gleich dem ersten vorbestimmten Wert ist,
- oder, im entgegengesetzten Fall, der Anforderung, die in der dem Prozessor (PEᵢ) zugeordneten Stufe (REPᵢ) enthalten ist,
in die hinter dem Prozessor (PEᵢ) angeordnete Stufe (REP_{i- 1}) des Eingangsschieberegisters autorisiert,
wobei dem Anforderungsindikator (B), der jeder neuen Anforderung zugeordnet ist, die in die dahinter gelegene Stufe (RE-Pᵢ₋₁) übertragen wird, durch den Anforderungssteuerschaltkreis (PCᵢ) ein zweiter vorbestimmter Wert auferlegt wird, und daß der Ausgang der ersten Stufe (REMᵢ; REPᵢ) des Eingangsschieberegistes mit dem Eingang der letzten Stufe (REPp; REMₙ) des Eingangsschieberegisters über den Anforderungsbestätigungsschaltkreis (MAᵢ) oder den Anforderungssteuerschaltkreis (PCᵢ) verbunden ist, der der ersten Stufe zugeordnet ist.

4. Zentraleinheit nach Anspruch 3, dadurch gekennzeichnet, daß der Anforderungssteuerschaltkreis (PCᵢ) eines Prozessors (PEᵢ) mit dem Ausgang der Stufe (REPᵢ₊₁, REMⱼ) verbunden ist, die vor der Stufe (REPᵢ) des dem Prozessor (PEᵢ) zugeordneten Eingangsschieberegisters angeordnet ist, daß der Anforderungssteuerschaltkreis (PCᵢ) die Anforderungsauswahleinrichtung (2PCᵢ) steuert, um die Übertragung einer neuen Anforderung des Prozessors zu dem Eingang der hinter dem Prozessor (PEᵢ) angeordneten Stufe (REP_{i- 1}) des Eingangsschieberegisters in den folgenden Fällen zu autorisieren:
a) die davor gelegene Stufe (REMⱼ) ist einem Modul (MMⱼ) zugeordnet und enthält einen Anforderungsindikator (B), dessen Wert gleich dem ersten vorgegebenen Wert ist, oder auch wenn der Wert des Indikators (B) gleich dem zweiten vorgegebenen Wert ist und die Anforderung, die in der davor gelegenen Stufe (REMⱼ) enthalten ist, den Modul (MMⱼ) adressiert und der Modul (MMⱼ) verfügbar ist,
b) die davor gelegene Stufe (REPᵢ₊₁) ist einem Prozessor (PEᵢ₊₁) zugeordnet und enthält einen Anforderungsindikator (B), dessen Wert gleich dem ersten vorgegebenen Wert ist, und es steht keine Anforderung am Ausgang des davor gelegenen Prozessors (PEᵢ₊₁) bereit.

5. Zentraleinheit nach einem der Ansprüche 2 bis 4, dadurch gekennzeichnet, daß jedem Prozessor (PEᵢ) ein Antwortbestätigungsschaltkreis (PAᵢ) zugeordnet ist, um jeder Antwort einen Antwortindikator (Bᵣ) zuzuordnen, der über das Ausgangsschieberegister übertragen wird, wobei der Antwortbestätigungsschaltkreis (PAᵢ) dem Antwortindikator (Bᵣ) einen ersten vorgegebenen Wert auferlegt, wenn ein Antwortbestätigungssignal (RACK) von dem Prozessor (PEᵢ) geliefert wird, was angibt, daß er die an seinem Eingang vorliegende Antwort annimmt, und daß derAusgang jeder Stufe (RSMⱼ) des Ausgangsschieberegisters, die einem Modul (MMⱼ) zugeordnet ist, mit einem Antwortsteuerschaltkreis (MCⱼ) verbunden ist, wobei der Antwortsteuerschaltkreis (MCⱼ) eine Antwortauswahleinrichtung (2MCⱼ) aufweist, die die Übertragung
- entweder einer am Ausgang des Moduls (MMⱼ) verfügbaren Antwort, wenn der Wert des in der Stufe (RSMⱼ) enthaltenen Antwortindikators (Bᵣ) gleich dem vorgegebenen ersten Wert ist,
- oder, im entgegengesetzten Fall, der Antwort, die in der dem Modul (MMⱼ) zugeordneten Stufe (RSMⱼ) enthalten ist,
in die Stufe (RSM_{j- 1}) des stromabwärts des Moduls (MMⱼ) angeordneten Ausgangsschieberegisters autorisiert, wobei dem Antwortindikator (Bᵣ), der jeder neuen, in die stromabwärts gelegene Stufe (RSM_{j- 1}) übertragenen Nachricht zugeordnet ist, durch den Antwortsteuerschaltkreis (MCⱼ) ein zweiter vorgegebener Wert auferlegt wird, und daß der Ausgang der ersten Stufe (RSP₁; RSMₙ) des Ausgangsschieberegisters mit dem Eingang der letzten Stufe (RSMₙ; RSPp) des Ausgangsschieberegisters über den Antwortbestätigungsschaltkreis (PAᵢ) oder den Antwortsteuerschaltkreis (MC₁) verbunden ist, der der ersten Stufe zugeordnet ist.

6. Zentraleinheit nach Anspruch 5, dadurch gekennzeichnet, daß der Antwortsteuerschaltkreis (MCⱼ) eines Moduls (MMⱼ) mit dem Ausgang der Stufe (RSMⱼ₊₁, RSPᵢ) verbunden ist, die vor der Stufe (RSMⱼ) des Ausgangsschieberegisters angeordnet ist, die dem Modul (MMⱼ) zugeordnet ist, und daß der Antwortsteuerschaltkreis (MCⱼ) die Antwortauswahleinrichtung (MCⱼ) steuert, um die Übertragung einer neuen Antwort des Moduls (MMⱼ) zu dem Eingang der hinter dem Modul (MMⱼ) gelegenen Stufe (RSMⱼ- ₁) des Ausgangsschieberegisters in den folgenden Fällen zu autorisieren:
a) die davor gelegene Stufe (RSP) ist einem Prozessor (PEᵢ) zugeordnet und enthält einen Antwortindikator (Bᵣ), dessen Wert gleich dem ersten vorgegebenen Wert ist oder auch wenn der Wert des Indikators (Bᵣ) gleich dem vorgegebenen zweiten Wert ist und die in der davor gelegenen Stufe (RSPᵢ) enthaltene Antwort für den Prozessor(PEᵢ) bestimmt und der Prozessor (PEᵢ) verfügbar ist,
b) die davor gelegene Stufe (RSMⱼ₊₁) ist einem Modul (MMⱼ₊₁) zugeordnet und enthält einen Antwortindikator (Bᵣ), dessen Wert gleich dem vorgegebenen ersten Wert ist, und am Ausgang des davor gelegenen Moduls (MMⱼ₊₁) steht keine Antwort bereit.

7. Zentraleinheit nach einem der vorhergehenden Ansprüche, dadurch gekennzeichnet, daß die Anforderungen in paralleler Weise einen Funktionscode zur Festlegung der in einem der Module (MMⱼ) auszuführenden Operation, eine Adresseninformation, Daten im Falle eines Schreibvorganges und eine Herkunftskennung im Falle eines Lesevorgangs enthalten, wobei die Herkunftskennung repräsentativ für die Identität des Prozessors (PEᵢ) ist, der die Anforderung abliefert, und daß die Antworten auf parallele Weise eine Zielkennung entsprechend der Herkunftskennung für die betreffende Anforderung, Daten im Falle eines Lesevorgangs, oder eine Fehlermeldung enthalten.

8. Informationsverarbeitungssystem, dadurch gekennzeichnet, daß es eine Vielzahl von Zentraleinheiten gemäß einem der Ansprüche 1 bis 7 umfaßt und daß eine erste Zentraleinheit (CPU₁) Anforderungen an eine zweite Zentraleinheit (CPU₂) über einen Anforderungsschnittstellenschaltkreis (D1-2) überträgt, der wie die Eingangsschnittstelle eines Speichers der ersten Zentraleinheit (CPU₁) und wie die Ausgangsschnittstelle eines Prozessors der anderen Zentraleinheit (CPU₂) arbeitet, und daß die zweite Zentraleinheit (CPU₂) ihre Antworten an eine andere Zentraleinheit (CPU₁) über einen Antwortschnittstellenschaltkreis (R₂-₁) überträgt, der wie die Eingangsschnittstelle eines Prozessors der zweiten Zentraleinheit (CPU₂) und wie die Ausgangsschnittstelle eines Speichers der anderen Zentraleineit (CPU₁) arbeitet.

9. Informationsverarbeitungssystem nach Anspruch 8, dadurch gekennzeichnet, daß der Anforderungsschnittstellenschaltkreis (D1-2) einen Decoder (DE2) aufweist, dessen Eingang mit dem Ausgang einer Stufe (REMⱼ) des Eingangsschieberegisters einer ersten Zentraleinheit (CPU₁) verbunden ist, wobei es der Eingangsdecoder (DE2) gestattet, zu erfassen, ob die in der Stufe (REMⱼ) enthaltene Anforderung für eine zweite Zentraleinheit (CPU₂) bestimmt ist, und daß der Antwortschnittstellenschaltkreis (R₂-₁) einen Ausgangsdecoder (DS₁) aufweist, dessen Eingang mit dem Ausgang einer Stufe (RSPᵢ) des Ausgangsschieberegisters der zweiten Zentraleinheit (CPU₂) verbunden ist, wobei es der Ausgangsdecoder (DS₁) gestattet, zu erfassen, ob die Antwort, die in der Stufe (RSPᵢ) des Ausgangsschieberegisters der zweiten Zentraleinheit (CPU₂) enthalten ist, für die Zentraleinheit (CPU₁) bestimmt ist, mit der der Ausgangsdecoder verbunden ist.

## Claims

1. A central unit for a data-processing system, said unit including several processors (PEᵢ) associated with several memory modules (MMⱼ) designed to receive requests from said processors (PEᵢ), said requests having the form of command, address and possibly data signals, each module (MMⱼ) including means for decoding said requests appearing at its input and means for furnishing response signals to said requests, said central unit being characterised in that the requests sent by each processor (PEᵢ) are transmitted to the input of each of the said modules (MMᵢ) via an input shift register (REM₁, ...., REMj, .... REMₙ, .... REP₁, ....REPᵢ, .... REPₚ₋₁), in that the responses sent by each of said modules (MMⱼ) are transmitted to the input of each processor (PEᵢ) via an output shift register (RSP₁, .... RSP,, .... RSPp, .... RSM₁, .... RSMⱼ, .... RSMₙ₋₁), in that, for any given processor (PEᵢ), the number of stages of said input shift registerthat make it possible to access the modules (MMⱼ) is different for each of the modules (MMⱼ) and in that, for any processor (PEᵢ) the total number of stages (REPᵢ, REMⱼ, RSP,, RSMⱼ) belonging to the input and output shift registers associated with one of said modules (MMⱼ) is constant and independent of the module and the processor in question.

2. A central unit according to Claim 1, characterised in that it includes a single input shift register and a single output shift register, in that each processor (PEᵢ) and each module (MMⱼ) is associated with a stage (REPᵢ, REMⱼ) of said input shift register and with a stage (RSPᵢ, RSMⱼ) of the output shift register, in that the output of each processor (PEᵢ) is connected to the output of the associated stage (REPᵢ) of the input shift register, in that the output of each module (MMⱼ) is connected to the output of the associated stage (RSMⱼ) of the output shift register, in that the input of each processor is connected to the output of the associated stage (RSP) of the output shift register and in that the input of each module is connected to the output of the associated stage (REMⱼ) of the output shift register.

3. A central unit according to Claim 2, characterised in that each module (MMⱼ) is associated with a request acknowledgement circuit (MAⱼ) to associate each request with a request indicator (B) transported by said input shift register, said request acknowledgement circuit (MAⱼ) forcing said request indicator (B) to a first set value when an acknowledgement signal (ACKⱼ) is provided by said module (MMⱼ) indicating that it accepts the request present at its input and in that each stage (REPᵢ) of the input shift register which is associated with a processor (PEᵢ) has its output connected to a request control circuit (PCᵢ) associated with said processor (PEᵢ), the request control circuit (PCᵢ) including a request selection device (2PCᵢ) authorizing the transfer into the stage (REP_{i- 1}) of the input shift register placed downstream from said processor (PEᵢ)
- either of a new request available in the output of said processor (PEᵢ), if the value of said indicator (B) contained in said stage (REPᵢ) is equal to said first set value,
- or of the request contained in said stage (REPᵢ) associated with said processor (PEᵢ) in the opposite case,
the request indicator (B) associated with any new request transferred into said stage (REP_{i- 1}) downstream being forced to a second set value by said request control circuit (PC),
and in that the output of the first stage (REM₁;REP₁) of the input shift register is connected to the input of the last stage (REPp; REMₙ) of said input shift register via a request acknowledgement circuit (MAᵢ) or a request control circuit (PCᵢ) associated with the first stage.

4. A central unit according to Claim 3, characterised in that the request control circuit (PCᵢ) of a processor (PEᵢ) is connected to the output of the stage (REPᵢ₊₁, REMⱼ) placed upstream from the stage (REPᵢ) of the input shift register associated with said processor (PEᵢ), in that said request control circuit (PCᵢ) commands said request selection device (2PCᵢ) to authorize the transfer of a new request from said processor to the input of the stage (REP_{i- 1}) of the input shift register placed downstream from said processor (PEᵢ) in the following cases:
a) said stage (REMⱼ) upstream is associated with a module (MMⱼ) and contains a request indicator (B) the value of which is equal to said first set value, or the value of said indicator (B) is equal to said second set value and the request contained in said stage (REMⱼ) upstream addresses said module (MMⱼ) and said module (MMⱼ) is available,
b) said stage (REPᵢ₊₁) upstream is associated with a processor (PEᵢ₊₁) and contains a request indicator (B) the value of which is equal to said first set value and no request is ready in the output of said processor (PEᵢ₊₁) upstream.

5. A central unit according to one of Claims 2 to 4, characterised in that each processor (PEᵢ) is associated with a response acknowledgement circuit (PAᵢ) to associate with each response a response indicator (B) transported by said output shift register, said response acknowledgement circuit (PAᵢ) forcing said response indicator (B) to a first set value when a response acknowledgement signal (RACK) is provided by said processor (PEᵢ) indicating that it accepts the response present at its input and in that the output of each stage (RSMⱼ) of the output shift register which is associated with a module is connected to a response control circuit (MCⱼ), said response control circuit (MCⱼ) containing a response selection device (2MCⱼ) authorizing the transfer into the stage (RSMⱼ₋₁) of the output shift register placed downstream from said module (MMⱼ)
- either of a response available in output of said module (MMⱼ) if the value of said response indicator (Br) contained in said stage (RSMⱼ) is equal to the first set value,
- or of the response contained in said stage (RSMⱼ) associated with said module (MMⱼ) in the opposite case,
the response indicator (Br) associated with any new response transferred into said stage (RSMⱼ- ₁) downstream being forced to a second set value by said response control circuit (MCⱼ), and in that the output of the first stage (RSP₁; RSMₙ) of the output shift register is connected to the input of the last stage (RSMₙ; RSPp) of said output shift register via a response acknowledgement circuit (PA₁) or a response control circuit (MC₁) associated with the first stage.

6. A central unit according to Claim 5, characterised in that the response control circuit (MCⱼ) of a module (MMⱼ) is connected to the output of the stage (RSMⱼ₊₁, RSPᵢ) placed upstream from the stage (RSMⱼ) of the output shift register associated with said module (MMⱼ), in that said response control circuit (MCⱼ) commands the response selection device (MCⱼ) to authorize the transfer of a new re- ponse from said module (MMⱼ) to the input of the stage (RSMⱼ- ₁) of the output shift register placed downstream from said module (MMⱼ) in the following cases:
a) said stage (RSP) upstream is associated with a processor (PEᵢ) and contains a response indicator (Br) the value of which is equal to said first set value, or the value of said indicator (Br) is equal to said second set value and the response contained in said stage (RSP) upstream is addressed to said processor (PEᵢ) and said processor (PEᵢ) is available,
b) said stage (RSMⱼ₊₁) upstream is associated with a module (MMⱼ₊₁) and contains a response indicator (Br) the value of which is equal to said first set value and no response is ready in outputofthe said module (MMⱼ₊₁) upstream.

7. A central unit according to any one of the preceding claims, characterised in that the requests contain in parallel a function code serving to define the operation to be performed in one of the modules (MMⱼ), address data, data in the case of a write and a tag of origin in the case of a read, said tag of origin being representative of the identity of the processor (PEᵢ) which sends the request, and in that the responses contain in parallel a destination tag corresponding to the tag of origin for the request considered, data in the case of a read, or an error report.

8. A data-processing system, characterised in that it includes a number of central units according to any one of Claims 1 to 7, and in that a first central unit (CPU₁) transmits request to a second central unit (CPU₂) via a request interface circuit (D1-2) functioning as the input interface of a memory of said first central unit (CPU₁) and as the output interface of a processor of said other central unit (CPU₂) and in that said second central unit (CPU₂) transmits its responses to another central unit (CPU₁) via a response interface circuit (R2-1) functioning as the input interface of a processor of the second'central unit (CPU₂) and as the output interface of a memory of said other central unit (CPU₁).

9. A data-processing system according to Claim 8, characterised in that said input interface circuit (D1-2) includes a decoder (DE₂) the input of which is connected to the output of one stage (REMⱼ) of the input shift register of a first central unit (CPU₁), said input decoder (DE₂) making it possible to detect whether the request contained in said stage (REMⱼ) is addressed to a second central unit (CPU₂) and in that the response interface circuit (R₂-₁) includes an output decoder (DS₁) the input of which is connected to the output of a stage (RSPᵢ) of the output shift register of the second central unit (CPU₂), said output decoder (DS₁) making it possible to detect whether the response contained in said stage (RSPᵢ) of the output shift register of the second central unit (CPU₂) is addressed to the central unit (CPU₁) to which said output decoder is connected.
